# EUROPEAN PATENT SPECIFICATION

(11) **EP 3 641 450 B1**
(45) Date of publication and mention of the grant of the patent: **19.03.2025**
(21) Application number: 18817873.5
(22) Date of filing: 12.06.2018
(51) Int. Cl.: H04W 72/23

(54) **RESOURCE CONFIGURATION METHOD, BASE STATION AND TERMINAL**
RESSOURCENKONFIGURATIONSVERFAHREN, BASISSTATION UND ENDGERÄT
PROCÉDÉ DE CONFIGURATION DE RESSOURCE, STATION DE BASE ET TERMINAL

(30) Priority: 14.06.2017 CN 201710454486
(43) Date of publication of application: 22.04.2020
(73) Proprietor: Vivo Mobile Communication Co., Ltd., Dongguan, Guangdong 523860 (CN)
(72) Inventor: LU, Zhi, Dongguan Guangdong 523860 (CN); SHEN, Xiaodong, Dongguan Guangdong 523860 (CN); LI, Na, Dongguan Guangdong 523860 (CN)
(74) Representative: Beck Greener LLP
(86) International application number: PCT/CN2018/090793
(87) International publication number: WO 2018/228363

(56) References cited:
- EP-A1- 3 355 506
- WO-A1-2017/050062
- CN-A- 103 283 169
- CN-A- 106 357 372
- GUANGDONG OPPO MOBILE TELECOM: "Resource indication for UL control channel", vol. RAN WG1, no. Hangzhou; 20170515 - 20170519, 6 May 2017 (2017-05-06), XP051262048, Retrieved from the Internet <URL:http://www.3gpp.org/ftp/tsg_ran/WG1_RL1/TSGR1_89/Docs/> [retrieved on 20170506]
- ZTE: "NR PUCCH resource allocation", vol. RAN WG1, no. Hangzhou, China; 20170515 - 20170519, 14 May 2017 (2017-05-14), XP051272387, Retrieved from the Internet <URL:http://www.3gpp.org/ftp/Meetings_3GPP_SYNC/RAN1/Docs/> [retrieved on 20170514]
- CATT: "Discussion on NR DCI formats", vol. RAN WG1, no. Hangzhou; 20170515 - 20170519, 14 May 2017 (2017-05-14), XP051272707, Retrieved from the Internet <URL:http://www.3gpp.org/ftp/Meetings_3GPP_SYNC/RAN1/Docs/> [retrieved on 20170514]
- INTEL CORPORATION: "Time and frequency domain resource allocation for long PUCCH", vol. RAN WG1, no. Hangzhou; 20170515 - 20170519, 14 May 2017 (2017-05-14), XP051272608, Retrieved from the Internet <URL:http://www.3gpp.org/ftp/Meetings_3GPP_SYNC/RAN1/Docs/> [retrieved on 20170514]
- CATT: "PUCCH resource allocation", vol. RAN WG1, no. Hangzhou; 20170515 - 20170519, 6 May 2017 (2017-05-06), XP051261853, Retrieved from the Internet <URL:http://www.3gpp.org/ftp/tsg_ran/WG1_RL1/TSGR1_89/Docs/> [retrieved on 20170506]

## Description

### TECHNICAL FIELD

The present disclosure relates to the field of communication technologies, and in particular to a resource configuration method, a base station, and a terminal.

### BACKGROUND

Generally, the Physical Uplink Control Channel (PUCCH) resource of downlink traffic in LTE is implicitly determined by a minimum Control Channel Element (CCE) of Physical downlink Control Channel (PDCCH). The timing of the PUCCH (also referred to as timing sequence) is determined according to a fixed timing relationship. For New Radio (NR), there are different lengths of PUCCH formats due to the introduction of different numerologies. Different slot structures makes it difficult to determine the timing relationship of PUCCH.

Compared with the existing mobile communication systems, the future 5G mobile communication systems need to adapt to more diverse scenarios and business needs. The main scenarios of 5G include enhanced mobile broadband (eMBB), Ultra-Reliable Low Latency Communications (URLLC), and massive machine-type communications (mMTC), which require high reliability, low latency, large bandwidth and wide coverage. For services in some scenarios, higher bandwidth transmission is required to provide higher transmission rates. However, the existing PUCCH configuration mode in LTE cannot guarantee the reliability of 5G communication. "Resource indication for UL control channel" (R1-1707715) discusses DL-data-associated UCI resource allocation and indication schemes. "NR PUCCH resource allocation" (R1-1707172) discusses how to determine PUCCH resources. "Discussion on NR DCI formats" (R1-1707499) discusses some options for constructing DCI formats. WO2017/05562A1 discusses PUCCH-based uplink control information transmission method. "PUCCH resource allocation" (R1- 1707505) discuss PUCCH resource allocation for both short PUCCH and long duration PUCCH formats.

### SUMMARY

The invention is set out in the appended set of claims. An embodiment of the present disclosure provides a resource configuration method, including:
transmitting configuration information of a physical uplink control channel (PUCCH) resource to a terminal;
wherein the configuration information includes a time interval from downlink data to feeding back PUCCH resource, acknowledgement/non-acknowledgement resource indication information, and format information employed for feeding back the PUCCH resource; wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

An embodiment of the present disclosure provides a resource configuration method, including:
acquiring configuration information of a physical uplink control channel (PUCCH) resource sent by a base station;
wherein the configuration information includes a time interval from downlink data to feeding back PUCCH resource, acknowledgement/non-acknowledgement resource indication information, and format information employed for feeding back the PUCCH resource; wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

An embodiment of the present disclosure provides a base station, including:
a transmission module configured to transmit configuration information of a physical uplink control channel (PUCCH) resource to a terminal;
wherein the configuration information includes a time interval from downlink data to feeding back PUCCH resource, acknowledgement/non-acknowledgement resource indication information, and format information employed for feeding back the PUCCH resource; wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

An embodiment of the present disclosure provides a terminal, including:
an acquiring module configured to acquire configuration information of a physical uplink control channel (PUCCH) resource sent by a base station;
wherein the configuration information includes a time interval from downlink data to feeding back PUCCH resource, acknowledgement/non-acknowledgement resource indication information, and format information employed for feeding back the PUCCH resource; wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

### BRIEF DESCRIPTION OF THE DRAWINGS

Fig. 1 is a first schematic flowchart of a resource configuration method according to an embodiment of the present disclosure;
Fig. 2 is a schematic diagram showing positional relationship of a time interval;
Fig. 3 is a schematic diagram showing a format division of a PUCCH;
Fig. 4 is a schematic diagram showing CP-OFDM frequency hopping of 1 symbol within one bandwidth part;
Fig. 5 is a schematic diagram showing frequency hopping of 2 symbols within one bandwidth part;
Fig. 6 is a schematic diagram showing frequency hopping of 2 symbols between bandwidth parts;
Fig. 7 is a schematic diagram showing frequency hopping of 7 symbols between bandwidth parts;
Fig. 8 is a second schematic flowchart of a resource configuration method according to an embodiment of the present disclosure;
Fig. 9 is a block diagram of a base station according to an embodiment of the present disclosure ;
Fig. 10 is a block diagram showing structure of a base station;
Fig. 11 is a block diagram of a terminal according to an embodiment of the present disclosure ; and
Fig. 12 is a block diagram showing structure of a terminal.

### DETAILED DESCRIPTION

In order to make the objects, the technical solutions and the advantages of the present disclosure more apparent, the present disclosure will be described in details hereinafter in conjunction with the drawings and embodiments.

In view of the problem that the PUCCH determination mode in the related art cannot guarantee the reliability of 5G communication, the present disclosure provides a resource configuration method, a base station and a terminal.

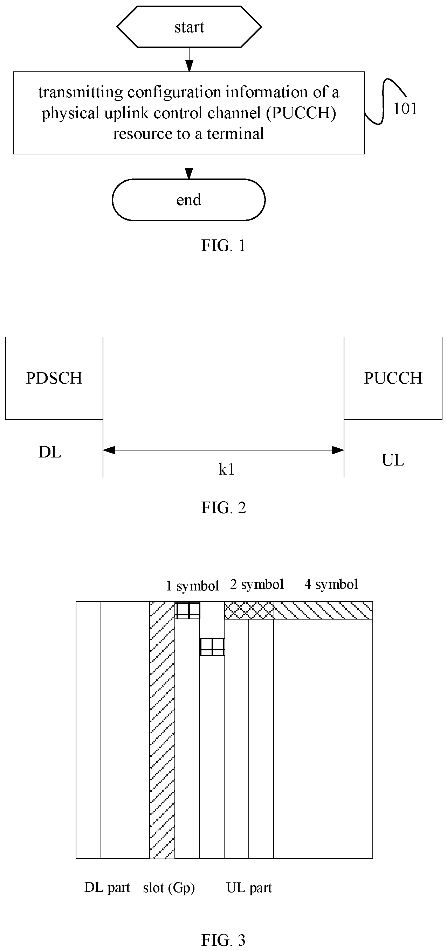

As shown in Fig. 1 , one embodiment of the present disclosure provides a resource configuration method, which is applied to a base station, and includes:
Step 101: transmitting configuration information of a physical uplink control channel (PUCCH) resource to a terminal.

The configuration information includes at least one of a time interval from downlink data to feeding back PUCCH resource, waveform information employed for transmitting the PUCCH resource, acknowledgement/non-acknowledgement resource indication information, format information employed for feeding back the PUCCH resource, and frequency hopping identification information of the PUCCH resource.

It should be noted that, the base station usually transmits the configuration information to a terminal through downlink control information (DCI). When receiving by the terminal, the terminal first receives the DCI, and then extracts the configuration information of the PUCCH resource in the DCI.

Specifically, when the configuration information includes the time interval from the downlink data to feeding back PUCCH resource, the time interval is one of a plurality of preset time intervals. The plurality of preset time intervals are set at equal intervals or unequal intervals.

For example, as shown in Fig. 2, the time interval (k1) is a duration between after transmission of physical downlink shared channel (PDSCH) and before transmission of the PUCCH.

The time interval may be expressed by a specific time or by a quantity of slots. When setting the plurality of preset time intervals, the plurality of preset time intervals may be set at equal intervals, for example, (1, 2, 3, 4) slots. The plurality of preset time intervals may also be set at unequal intervals, for example, (1, 2, 3, 6) slots. Specifically, the preset time interval is configured by a high layer.

It should be noted that two types of waveforms may be employed for transmission of the uplink PUCCH. One is DFT-spread-orthogonal frequency division multiplexing (DFT-S-OFDM)-based waveform, and the other is cyclic prefix orthogonal frequency division multiplexing (CP-OFDM)-based waveform. Then, a 1-bit waveform indication can be introduced to indicate which waveform is employed by the PUCCH channel, and two states of the bit represent two waveforms, respectively.

Specifically, when the configuration information includes the acknowledgement/non-acknowledgement resource indication information, the acknowledgement/non-acknowledgement resource indication information includes: a resource set comprised of at least one resource; or, the acknowledgement/non-acknowledgement resource indication information includes: a resource and at least one offset.

For PUCCH channel, it is usually shared by multiple terminals. If each terminal is allocated with a fixed PUCCH resource, when the terminal has no service, the resource may be idle and this reduces resource utilization efficiency. When the acknowledgment/non-acknowledgement (ACK/NACK) resource indication information includes a resource set comprised of at least one resource, a resource available to the terminal for transmitting PUCCH is indicated by using the DCI to indicate one resource in the configured resource set. When the acknowledgment/non-acknowledgement resource indication information includes a resource and at least one offset, a specific resource available to the terminal can be obtained through calculation based on the resource and the offset.

Specifically, when the configuration information includes the format information employed for feeding back the PUCCH resource, if there are definite PUCCH formats and quantity in a slot, then the format information includes PUCCH identification information; if an uplink of a slot or an uplink slot includes dynamically variable PUCCH formats, then the format information includes a starting symbol position of the PUCCH and a length of the PUCCH.

The PUCCH format may be implemented in the following two ways:
1. If there are definite PUCCH formats and quantity in a slot, then, a sequence number carrying PUCCH format in the DCI can indicate which PUCCH the terminal can use. As shown in Fig. 3, in an uplink (UL) part of a slot, there are four PUCCHs including two 1-symbol PUCCHs, one 2-symbol PUCCH and one 4-symbol PUCCH. The DCI can indicate which PUCCH format to use with 2 bits.
2. If an uplink of a slot or an uplink slot includes dynamically variable PUCCH formats, then it is necessary to indicate format and location of which PUCCH the terminal specifically uses; a starting symbol of the PUCCH and a length of the PUCCH may be notified in the DCI.

It should be noted that the NR supports short PUCCH of 1 or 2 symbols, and the NR also supports long PUCCH of 4-14 symbols, thus multiple PUCCH formats can be defined and each PUCCH may correspond to a varied quantity of symbols or bearing capacity. For configuration of the PUCCH transmission format of smaller bits, if there are many configuration parameters, the signaling overhead is too large and the resource utilization efficiency is not high. Therefore, for the PUCCH transmission format of smaller bits, the PUCCH resource may be implicitly determined. At this point, a time domain position (i.e., a starting OFDM symbol and a length) of a PUCCH channel in one slot may be configured by the upper layer, and an available resource may be implicitly determined (according to CCE and other information) or may be configured to the terminal. If UCI information that the terminal needs to feed back is small (i.e., smaller than or equal to a preset value), a small-capacity PUCCH is used.

The PUCCH format indicated in the DCI may implicitly indicate uplink control information (UCI) sent by the terminal. For example, if the indicated PUCCH format has a capacity of 1-2 bits, then the terminal only transmits ACK/NACK information. If the indicated format is greater than or equal to a preset quantity of bits, ACK/NACK and Channel Quality Indicator (CQI) information are transmitted simultaneously.

Specifically, when the configuration information includes the frequency hopping identification information of the PUCCH resource, the frequency hopping identification information includes: frequency hopping indication information and/or a long-PUCCH resource frequency hopping division indication.

The frequency hopping indication information includes: an intra-bandwidth part (BP) frequency hopping indication or an inter-BP frequency hopping indication.

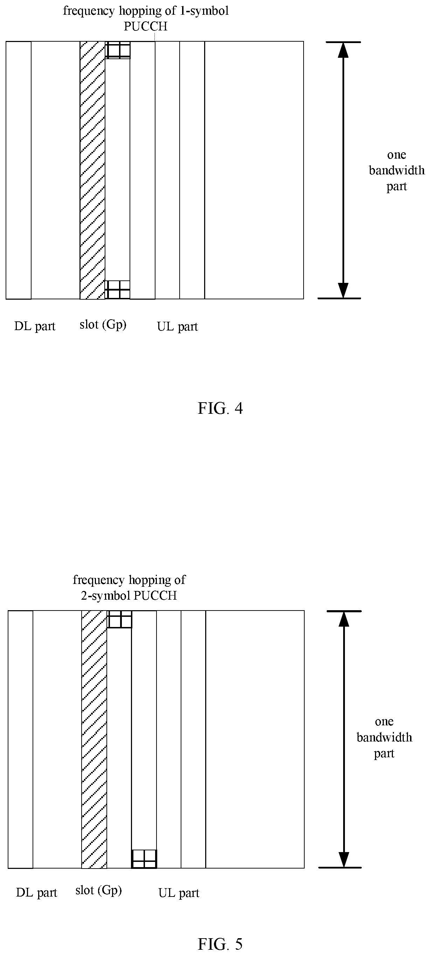

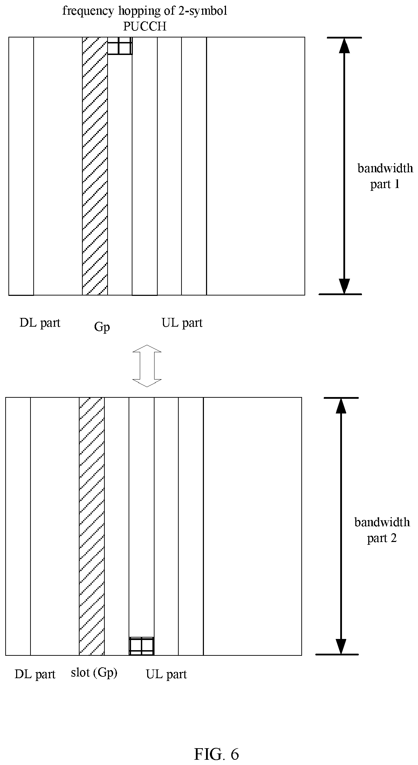

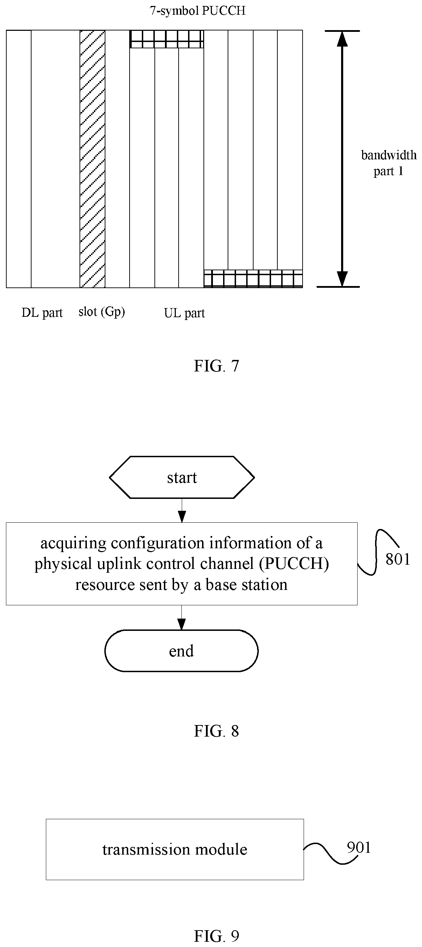

It should be noted that, in order to obtain the frequency diversity gain, the frequency hopping configuration may be activated for some PUCCH formats. Considering the gain and design complexity, the frequency hopping part may be divided into two parts, that is, PUCCH symbols may be divided into two parts, i.e., transmission in the bandwidth part (BP) or transmission outside the bandwidth part. For example, Fig. 4 shows frequency hopping of a 1-symbol PUCCH in CP-OFDM format. For a 2-symbol PUCCH and long-PUCCH, Fig. 5 shows frequency hopping of 2 symbols within the bandwidth part. Fig. 6 shows frequency hopping of 2 symbols between the bandwidth parts. For a PUCCH with a length of odd symbols, there may be two frequency hopping patterns. For example, for a 7-symbol PUCCH as shown in Fig. 7, when performing frequency hopped transmission, three or four symbols may be divided into a first part, as shown in Fig. 7. It should be noted that the frequency hopping identification information may be indicated by a high-level signaling or DCI signaling.

In the above figures, DL part represents a downlink part, UL part represents an uplink part, and GP represent a slot.

According to the solution of determining the PUCCH resource configuration in the embodiment of the present disclosure, when the base station sends the DCI of the downlink data to the terminal, the DCI carries the configuration information for indicating the PUCCH resource. This can flexibly allocate PUCCH formats and resources to the terminal according to the usage requirement, thereby effectively ensuring the reliability of 5G communication.

As shown in Fig. 8, one embodiment of the present disclosure provides a resource configuration method, which is applied to a terminal, including the following steps.

Step 801: acquiring configuration information of a physical uplink control channel (PUCCH) resource sent by a base station.

The configuration information includes at least one of a time interval from downlink data to feeding back PUCCH resource, waveform information employed for transmitting the PUCCH resource, acknowledgement/non-acknowledgement resource indication information, format information employed for feeding back the PUCCH resource, and frequency hopping identification information of the PUCCH resource.

Specifically, implementation of the step 801 includes:
receiving downlink control information (DCI) carrying the configuration information of the PUCCH resource;
acquiring the configuration information of the PUCCH resource in the DCI.

Specifically, when the configuration information includes the time interval from the downlink data to feeding back PUCCH resource, the time interval is one of a plurality of preset time intervals. The plurality of preset time intervals are set at equal intervals or unequal intervals.

Specifically, when the configuration information includes the acknowledgement/non-acknowledgement resource indication information, the acknowledgement/non-acknowledgement resource indication information includes: a resource set comprised of at least one resource; or, the acknowledgement/non-acknowledgement resource indication information includes: a resource and at least one offset.

Specifically, when the configuration information includes the format information employed for feeding back the PUCCH resource, if there are definite PUCCH formats and quantity in a slot, then the format information includes PUCCH identification information; if an uplink of a slot or an uplink slot includes dynamically variable PUCCH formats, then the format information includes a starting symbol position of the PUCCH and a length of the PUCCH.

Specifically, when a length of the transmission format of the PUCCH resource is smaller than or equal to a preset value, the format information is implicitly notified by the base station.

Specifically, when the configuration information includes the format information employed for feeding back the PUCCH resource, the format information is used to implicitly indicate uplink control information (UCI) sent by the terminal.

Specifically, when the configuration information includes the frequency hopping identification information of the PUCCH resource, the frequency hopping identification information includes: frequency hopping indication information and/or a long-PUCCH resource frequency hopping division indication.

The frequency hopping indication information includes: an intra-bandwidth part (BP) frequency hopping indication or an inter-BP frequency hopping indication.

It should be noted that all the descriptions on the terminal in the foregoing embodiments may be applied to the resource allocation method on the terminal, and the same technical effects can be achieved.

As shown in Fig. 9, one embodiment of the present disclosure provides a base station, including:
a transmission module 901 configured to transmit configuration information of a physical uplink control channel (PUCCH) resource to a terminal.

The configuration information includes at least one of a time interval from downlink data to feeding back PUCCH resource, waveform information employed for transmitting the PUCCH resource, acknowledgement/non-acknowledgement resource indication information, format information employed for feeding back the PUCCH resource, and frequency hopping identification information of the PUCCH resource.

Specifically, the transmission module 901 is configured to: transmit downlink control information (DCI) carrying the configuration information of the PUCCH resource to the terminal.

Specifically, when the configuration information includes the time interval from the downlink data to feeding back PUCCH resource, the time interval is one of a plurality of preset time intervals. The plurality of preset time intervals are set at equal intervals or unequal intervals.

Specifically, when the configuration information includes the acknowledgement/non-acknowledgement resource indication information, the acknowledgement/non-acknowledgement resource indication information includes: a resource set comprised of at least one resource; or, the acknowledgement/non-acknowledgement resource indication information includes: a resource and at least one offset.

Specifically, when the configuration information includes the format information employed for feeding back the PUCCH resource, if there are definite PUCCH formats and quantity in a slot, then the format information includes PUCCH identification information; if an uplink of a slot or an uplink slot includes dynamically variable PUCCH formats, then the format information includes a starting symbol position of the PUCCH and a length of the PUCCH.

Specifically, when a length of the transmission format of the PUCCH resource is smaller than or equal to a preset value, the format information is implicitly notified to the terminal.

Specifically, when the configuration information includes the format information employed for feeding back the PUCCH resource, the format information is used to implicitly indicate uplink control information (UCI) sent by the terminal.

Specifically, when the configuration information includes the frequency hopping identification information of the PUCCH resource, the frequency hopping identification information includes: frequency hopping indication information and/or a long-PUCCH resource frequency hopping division indication.

The frequency hopping indication information includes: an intra-bandwidth part (BP) frequency hopping indication or an inter-BP frequency hopping indication.

It should be noted that the base station embodiment is a base station corresponding to the resource configuration method applied to the base station, and all implementation manners of the foregoing embodiments are applicable to the base station embodiment, and the same technical effects can be achieved.

One embodiment of the present disclosure further provides a base station, including: a memory, a processor, and a computer program stored on the memory and executable on the processor. When the computer program is executed by the processor, each step of the resource configuration method applied to the base station in the above embodiment can be implemented, and the same technical effects can be achieved, which will not elaborated herein.

One embodiment of the present disclosure further provides a computer readable storage medium. The computer readable storage medium stores a computer program thereon. When the computer program is executed by the processor, each step of the resource configuration method applied to the base station in the above embodiment can be implemented, and the same technical effects can be achieved, which will not elaborated herein. The computer readable storage medium, for example, may be a read-only memory (ROM), a random access memory (RAM), a magnetic disk, and an optical disk.

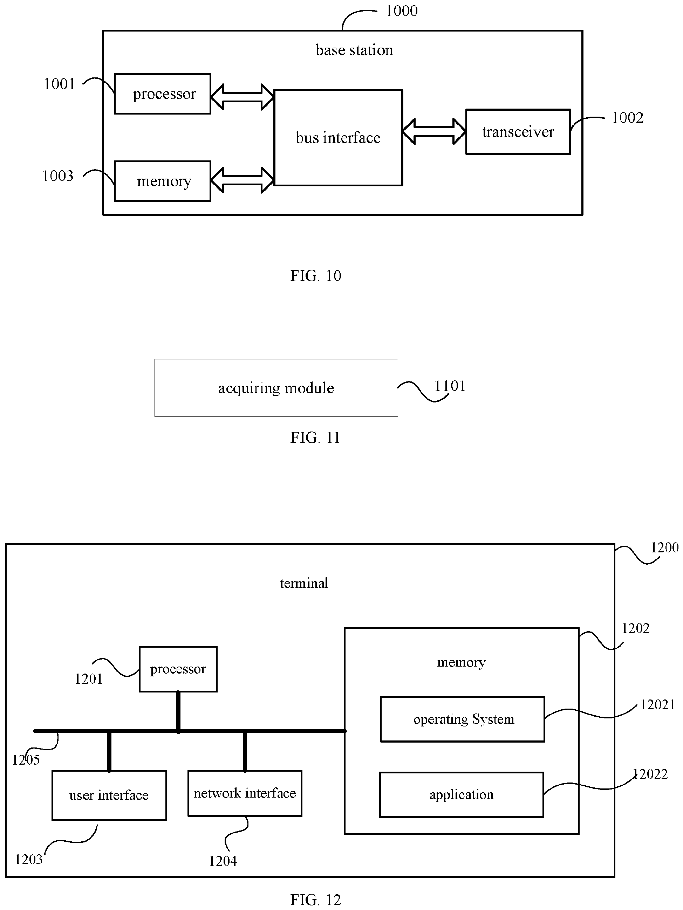

Fig. 10 is a block diagram of a base station according to an embodiment of the present disclosure. The base station can implement details of the resource configuration method applied to the base station in the above embodiment, and the same technical effects can be achieved. As shown in Fig. 10, the base station 1000 includes a processor 1001, a transceiver 1002, a memory 1003 and a bus interface.

The processor 1001 is configured to read a program in the memory 1003 and perform the following process:
transmitting configuration information of a physical uplink control channel (PUCCH) resource to a terminal through the transceiver 1002.

The configuration information includes at least one of a time interval from downlink data to feeding back PUCCH resource, waveform information employed for transmitting the PUCCH resource, acknowledgement/non-acknowledgement resource indication information, format information employed for feeding back the PUCCH resource, and frequency hopping identification information of the PUCCH resource.

In Fig. 10, the bus architecture may include any number of interconnected buses and bridges. Specifically, one or more processors represented by the processor 1001 and various circuits of memory represented by the memory 1003 are linked together. The bus architecture can also link various other circuits, such as peripherals, voltage regulators, and power management circuits, as is known in the art. Therefore, it will not be further described. The bus interface provides an interface. The transceiver 1002 may be multiple components, including a transmitter and a receiver, providing units for communicating with various other devices on a transmission medium.

The processor 1001 is in charge of managing bus architecture and general processing. The memory 1003 may store data used by the processor 1001 when performing operations.

Optionally, the processor 1001 is further configured to read the program in the memory 1003 and perform the following process:
transmitting downlink control information (DCI) carrying the configuration information of the PUCCH resource to the terminal through the transceiver 1002.

Specifically, when the configuration information includes the time interval from the downlink data to feeding back PUCCH resource, the time interval is one of a plurality of preset time intervals. The plurality of preset time intervals are set at equal intervals or unequal intervals.

Specifically, when the configuration information includes the acknowledgement/non-acknowledgement resource indication information, the acknowledgement/non-acknowledgement resource indication information includes: a resource set comprised of at least one resource; or, the acknowledgement/non-acknowledgement resource indication information includes: a resource and at least one offset.

Specifically, when the configuration information includes the format information employed for feeding back the PUCCH resource, if there are definite PUCCH formats and quantity in a slot, then the format information includes PUCCH identification information; if an uplink of a slot or an uplink slot includes dynamically variable PUCCH formats, then the format information includes a starting symbol position of the PUCCH and a length of the PUCCH.

Specifically, when a length of the transmission format of the PUCCH resource is smaller than or equal to a preset value, the format information is implicitly notified to the terminal.

Specifically, when the configuration information includes the format information employed for feeding back the PUCCH resource, the format information is used to implicitly indicate uplink control information (UCI) sent by the terminal.

Specifically, when the configuration information includes the frequency hopping identification information of the PUCCH resource, the frequency hopping identification information includes: frequency hopping indication information and/or a long-PUCCH resource frequency hopping division indication.

The frequency hopping indication information includes: an intra-bandwidth part (BP) frequency hopping indication or an inter-BP frequency hopping indication.

According to the base station in the embodiment of the present disclosure, the configuration information of the PUCCH resource is transmitted to the terminal, which can flexibly allocate PUCCH formats and resources to the terminal according to the usage requirement, thereby effectively ensuring the reliability of 5G communication.

As shown in Fig. 11, one embodiment of the present disclosure further provides a terminal, including:
an acquiring module 1101 is configured to acquire configuration information of a physical uplink control channel (PUCCH) resource sent by a base station.

The configuration information includes at least one of a time interval from downlink data to feeding back PUCCH resource, waveform information employed for transmitting the PUCCH resource, acknowledgement/non-acknowledgement resource indication information, format information employed for feeding back the PUCCH resource, and frequency hopping identification information of the PUCCH resource.

Specifically, the acquiring module 1101 includes:
a receiving unit configured to receive downlink control information (DCI) carrying the configuration information of the PUCCH resource; and
an acquiring unit configured to acquire the configuration information of the PUCCH resource in the DCI.

Specifically, when the configuration information includes the time interval from the downlink data to feeding back PUCCH resource, the time interval is one of a plurality of preset time intervals. The plurality of preset time intervals are set at equal intervals or unequal intervals.

Specifically, when the configuration information includes the acknowledgement/non-acknowledgement resource indication information, the acknowledgement/non-acknowledgement resource indication information includes: a resource set comprised of at least one resource; or, the acknowledgement/non-acknowledgement resource indication information includes: a resource and at least one offset.

Specifically, when the configuration information includes the format information employed for feeding back the PUCCH resource, if there are definite PUCCH formats and quantity in a slot, then the format information includes PUCCH identification information; if an uplink of a slot or an uplink slot includes dynamically variable PUCCH formats, then the format information includes a starting symbol position of the PUCCH and a length of the PUCCH.

Specifically, when a length of the transmission format of the PUCCH resource is smaller than or equal to a preset value, the format information is implicitly notified by the base station.

Specifically, when the configuration information includes the format information employed for feeding back the PUCCH resource, the format information is used to implicitly indicate uplink control information (UCI) sent by the terminal.

Specifically, when the configuration information includes the frequency hopping identification information of the PUCCH resource, the frequency hopping identification information includes: frequency hopping indication information and/or a long-PUCCH resource frequency hopping division indication.

The frequency hopping indication information includes: an intra-bandwidth part (BP) frequency hopping indication or an inter-BP frequency hopping indication.

It should be noted that the terminal embodiment is a terminal corresponding to the resource configuration method applied to the terminal, and all implementation manners of the foregoing embodiments are applicable to the terminal embodiment, and the same technical effects can be achieved.

One embodiment of the present disclosure further provides a terminal, including: a memory, a processor, and a computer program stored on the memory and executable on the processor. When the computer program is executed by the processor, each steps of the resource configuration method applied to the terminal in the above embodiment can be implemented, and the same technical effects can be achieved, which will not elaborated herein.

One embodiment of the present disclosure further provides a computer readable storage medium. The computer readable storage medium stores a computer program thereon. When the computer program is executed by the processor, each step of the resource configuration method applied to the terminal in the above embodiment can be implemented, and the same technical effects can be achieved, which will not elaborated herein. The computer readable storage medium, for example, may be a read-only memory (ROM), a random access memory (RAM), a magnetic disk, and an optical disk.

Fig. 12 is a block diagram of a terminal according to an embodiment of the present disclosure. The application entity of the resource configuration method applied to the terminal of the present disclosure will be described hereinafter in conjunction with the figure.

The terminal 1200 shown in Fig. 12 includes at least one processor 1201, a memory 1202, at least one network interface 1204 and a user interface 1203. Various components in the terminal 1200 are coupled together by a bus system 1205. It should be understood that, the bus system 1205 is configured to implement connection communication among these components. In addition to data bus, the bus system 1205 further includes power bus, control bus and status signal bus. However, for clarity of description, various buses are labeled as the bus system 1205 in Fig. 12.

The user interface 1203 may include a display device, a keyboard, or a clicking device (e.g., a mouse, a trackball, a touchpad, or a touch screen, etc.).

It should be understood that, in the embodiment of the present disclosure, the memory 1202 may be a transitory memory, or a non-transitory memory, or may include both of the transitory memory and the non-transitory memory. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. Many forms of RAM are available by way of illustration and not limitation, e.g., a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). The memory 1202 of the systems and methods described in the application is intended to include, without being limited to, these and any other suitable types of memory.

In some implementations, the memory 1202 stores the following elements, executable modules, or data structures, or a subset thereof, or an extended set thereof: an Operating System (OS) 12021 and an application 12022.

The OS 12021 includes various system programs, e.g., a frame layer, a core library layer, a driver layer, etc., are used to implement various basic services and to handle hardware-based tasks. The application 12022 includes various applications, such as a media player (Media Player), a browser, and so on, for implementing various application services. A program implementing the method of the embodiments in the present disclosure may be included in the application 12022.

In one embodiment of the present disclosure, the mobile terminal 1200 further includes: a computer program stored on the memory 1202 and executable on the processor 1201. Specifically, the computer program may be a computer control program in the application 12022. The computer program is executed by the processor 1201 to implement the following step of acquiring configuration information of a physical uplink control channel (PUCCH) resource sent by the base station.

The configuration information includes at least one of a time interval from downlink data to feeding back PUCCH resource, waveform information employed for transmitting the PUCCH resource, acknowledgement/non-acknowledgement resource indication information, format information employed for feeding back the PUCCH resource, and frequency hopping identification information of the PUCCH resource.

The method provided by foregoing embodiments of the present disclosure may be applied to the processor 1201, or may be implemented by the processor 1201. The processor 1201 may be an integrated circuit chip with signal processing capability. During the implementation process, each step of the foregoing method may be completed by an integrated logic circuit of hardware in the processor 1201, or by an instruction in a form of software. The foregoing processor 1201 may be a general processor, a Digital Signal Processor (DSP), an Application Specific Integrated Circuit (ASIC), a Field Programmable Gate Array (FPGA), or other programmable logic devices, discrete gate or transistor logic device, discrete hardware components. Each method, step, and logic diagram provided by the embodiment of the present disclosure may be implemented, or executed. The general processor may be a microprocessor, or any conventional processor, and so on. The steps of the method provided by the embodiments of the present disclosure may be directly completed by the hardware decoding processor, or may be completed by a combination of hardware and software modules in the decoding processor. The software modules may be located in mature storage medium in the field, such as, the RAM, the flash memory, the ROM, the PROM, Electrically erasable programmable memory, and a register. The storage medium is located in the memory 1202. The processor 1201 reads information from the memory 1202, and completes steps of foregoing method in combination with the hardware.

It should be understood that, these embodiments described in the application may be implemented by hardware, software, firmware, middleware, microcode, or a combination thereof. For hardware implementation, in the one or more ASICs, DSPs, DSP Device (DSPDs), Programmable Logic Devices (PLDs), FPGAs, general processors, controllers, microcontrollers, microprocessors, a processing unit may be implemented in another electronic unit or a combination thereof, which is configured to implement the functions of the application.

For software implementation, techniques described in the application may be implemented, by executing modules (e.g., process, function, etc.) with corresponding functions in the application. Software codes may be stored in the memory, and executed by the processor. The memory may be implemented in the processor, or external to the processor.

Optionally, the computer program is executed by the processor 1201 to implement: receiving downlink control information (DCI) carrying the configuration information of the PUCCH resource, and acquiring the configuration information of the PUCCH resource in the DCI.

Specifically, when the configuration information includes the time interval from the downlink data to feeding back PUCCH resource, the time interval is one of a plurality of preset time intervals. The plurality of preset time intervals are set at equal intervals or unequal intervals.

Specifically, when the configuration information includes the acknowledgement/non-acknowledgement resource indication information, the acknowledgement/non-acknowledgement resource indication information includes: a resource set comprised of at least one resource; or, the acknowledgement/non-acknowledgement resource indication information includes: a resource and at least one offset.

Specifically, when the configuration information includes the format information employed for feeding back the PUCCH resource, if there are definite PUCCH formats and quantity in a slot, then the format information includes PUCCH identification information; if an uplink of a slot or an uplink slot includes dynamically variable PUCCH formats, then the format information includes a starting symbol position of the PUCCH and a length of the PUCCH.

Specifically, when a length of the transmission format of the PUCCH resource is smaller than or equal to a preset value, the format information is implicitly notified by the base station.

Specifically, when the configuration information includes the format information employed for feeding back the PUCCH resource, the format information is used to implicitly indicate uplink control information (UCI) sent by the terminal.

Specifically, when the configuration information includes the frequency hopping identification information of the PUCCH resource, the frequency hopping identification information includes: frequency hopping indication information and/or a long-PUCCH resource frequency hopping division indication.

The frequency hopping indication information includes: an intra-bandwidth part (BP) frequency hopping indication or an inter-BP frequency hopping indication.

The terminal 1200 can implement various processes implemented by the terminal in the foregoing embodiment. To avoid repetition, details are not described herein again.

The terminal of the embodiment of the present disclosure can flexibly use the PUCCH formats and resources according to usage requirements, thereby improving communication efficiency and ensuring reliability of 5G communication.

The various embodiments in the present specification are described in a progressive manner, and each embodiment focuses on differences from other embodiments, and the same similar parts between the various embodiments can be referred to each other.

Those skilled in the art will appreciate that embodiments of the present disclosure can be provided as a method, an apparatus, or a computer program product. Thus, embodiments of the present disclosure may take the form of an entire hardware embodiment, an entire software embodiment, or a combination of software and hardware. Moreover, the embodiments of the present disclosure may take the form of a computer program product embodied on one or more computer-usable storage media (including but not limited to a disk storage, CD-ROM, an optical storage, etc.) including computer usable program code.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should also be noted that in this application, relational terms such as first and second are merely used to differentiate different components rather than to represent any order, number or importance. Further, the term "including", "include" or any variants thereof is intended to cover a non-exclusive contain, so that a process, a method, an article or a terminal device, which includes a series of elements, includes not only those elements, but also includes other elements which are not explicitly listed, or elements inherent in such a process, method, article or terminal device. In absence of any further restrictions, an element defined by the phrase "including one..." does not exclude the existence of additional identical elements in a process, method, article, or terminal device that includes the element.

## Claims

1. A resource configuration method, the method comprising:
transmitting (101) configuration information of a physical uplink control channel, PUCCH, resource to a terminal;
wherein the configuration information comprises a time interval from downlink data to feeding back PUCCH resource, acknowledgement/non-acknowledgement resource indication information, **characterised in that** the configuration information further comprises a format information employed for feeding back the PUCCH resource;
wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

2. The resource configuration method according to claim 1, wherein the step of transmitting the configuration information of the PUCCH resource to the terminal, comprises:
transmitting downlink control information, DCI, carrying the configuration information of the PUCCH resource to the terminal.

3. The resource configuration method according to claim 1, wherein the time interval is one of a plurality of preset time intervals; and the plurality of preset time intervals are set at equal intervals or unequal intervals.

4. The resource configuration method according to claim 1, wherein the acknowledgement/non-acknowledgement resource indication information comprises a resource set comprising comprised of at least one resource; or, the acknowledgement/non-acknowledgement resource indication information comprises a resource and at least one offset.

5. The resource configuration method according to claim 1, wherein the configuration information further comprises at least one of waveform information employed for transmitting the PUCCH resource or frequency hopping identification information of the PUCCH resource.

6. The resource configuration method according to claim 5, wherein the format information is used to implicitly indicate uplink control information, UCI, sent by the terminal; or,
wherein the frequency hopping identification information comprises: frequency hopping indication information and/or a long-PUCCH resource frequency hopping division indication;
wherein the frequency hopping indication information comprises an intra-bandwidth part, BP, frequency hopping indication or an inter-BP frequency hopping indication.

7. A resource configuration method, the method comprising:
acquiring (801) configuration information of a physical uplink control channel, PUCCH, resource sent by a base station;
wherein the configuration information comprises a time interval from downlink data to feeding back PUCCH resource, acknowledgement/non-acknowledgement resource indication information **characterised in that** the configuration information further comprises a format information employed for feeding back the PUCCH resource;
wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

8. The resource configuration method according to claim 7, wherein the step of acquiring the configuration information of the PUCCH resource sent by the base station, comprises:
receiving downlink control information, DCI, carrying the configuration information of the PUCCH resource; and
acquiring the configuration information of the PUCCH resource in the DCI.

9. The resource configuration method according to claim 7, wherein the time interval is one of a plurality of preset time intervals; and the plurality of preset time intervals are set at equal intervals or unequal intervals.

10. The resource configuration method according to claim 7, wherein the acknowledgement/non-acknowledgement resource indication information comprises a resource set comprised of at least one resource; or, the acknowledgement/non-acknowledgement resource indication information comprises a resource and at least one offset.

11. The resource configuration method according to claim 7, wherein the configuration information further comprises at least one of waveform information employed for transmitting the PUCCH resource or frequency hopping identification information of the PUCCH resource .

12. The resource configuration method according to claim 11, wherein the format information is used to implicitly indicate uplink control information, UCI, sent by the terminal.

13. The resource configuration method according to claim 12, wherein the frequency hopping identification information comprises: frequency hopping indication information and/or a long-PUCCH resource frequency hopping division indication;
wherein the frequency hopping indication information comprises an intra-bandwidth part, BP, frequency hopping indication or an inter-BP frequency hopping indication.

14. A base station comprising:
a transmission module (901) configured to transmit configuration information of a physical uplink control channel, PUCCH, resource to a terminal;
wherein the configuration information comprises a time interval from downlink data to feeding back PUCCH resource, acknowledgement/non-acknowledgement resource indication information **characterised in that** the configuration information further comprises a format information employed for feeding back the PUCCH resource;
wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

15. A terminal comprising:
an acquiring module (1101) configured to acquire configuration information of a physical uplink control channel, PUCCH, resource sent by a base station;
wherein the configuration information comprises a time interval from downlink data to feeding back PUCCH resource, acknowledgement/non-acknowledgement resource indication information **characterised in that** the configuration information further comprises a format information employed for feeding back the PUCCH resource;
wherein the format information comprises short PUCCH of 1 or 2 symbols, or long PUCCH of 4-14 symbols; if an uplink of a slot or an uplink slot comprises dynamically variable PUCCH formats, then the format information comprises a starting symbol position of the PUCCH and a length of the PUCCH.

## Patentansprüche

1. Ressourcenkonfigurationsverfahren, wobei das Verfahren umfasst:
Senden (101) von Konfigurationsinformationen einer physischen Uplink-Steuerkanal-, PUCCH, Ressource an ein Endgerät;
wobei die Konfigurationsinformationen ein Zeitintervall von den Downlink-Daten bis zur Rückmeldung von Informationen zur Angabe einer Bestätigungs-/ Nicht-Bestätigungs-Ressource einer PUCCH-Ressource umfassen,
**dadurch gekennzeichnet, dass** die Konfigurationsinformationen ferner eine Formatinformation umfassen, die für die Rückmeldung der PUCCH-Ressource verwendet wird;
wobei die Formatinformation einen kurzen PUCCH aus 1 oder 2 Symbolen oder einen langen PUCCH aus 4 bis 14 Symbolen umfasst; falls ein Uplink eines Speicherplatzes oder ein Uplink-Speicherplatz dynamisch variable PUCCH-Formate umfasst, dann umfasst die Formatinformation eine Anfangssymbolposition des PUCCH und eine Länge des PUCCH.

2. Ressourcenkonfigurationsverfahren nach Anspruch 1, wobei der Schritt des Sendens der Konfigurationsinformationen von der PUCCH-Ressource an das Endgerät umfasst:
Senden von Downlink-Steuerinformationen, DCI, welche die Konfigurationsinformationen der PUCCH-Ressource zum Endgerät transportieren.

3. Ressourcenkonfigurationsverfahren nach Anspruch 1, wobei das Zeitintervall eines von einer Vielzahl von voreingestellten Zeitintervallen ist; und la Vielzahl von voreingestellten Zeitintervallen auf gleiche oder ungleiche Intervalle eingestellt ist.

4. Ressourcenkonfigurationsverfahren nach Anspruch 1, wobei die Informationen zur Angabe einer Bestätigungs-/ Nicht-Bestätigungs-Ressource einen Ressourcensatz, der aus einer einzigen Ressource besteht, umfassen; oder die Informationen zur Angabe einer Bestätigungs-/ Nicht-Bestätigungs-Ressource eine Ressource und mindestens einen Versatz umfassen.

5. Ressourcenkonfigurationsverfahren nach Anspruch 1, wobei die Konfigurationsinformationen ferner mindestens eines von Wellenforminformationen, die verwendet werden, um die PUCCH-Ressource zu senden, oder von Informationen zur Identifizierung eines Frequenzsprungs umfassen.

6. Ressourcenkonfigurationsverfahren nach Anspruch 5, wobei die Formatinformation verwendet wird, um implizit Uplink-Informationen, UCI, anzugeben, die von dem Endgerät gesendet werden; oder
wobei die Informationen zur Identifizierung eines Frequenzsprungs umfassen: Informationen einer Angabe eines Frequenzsprungs und/oder eine Angabe einer Frequenzsprungteilung einer Ressource eines langen PUCCH;
wobei die Informationen zur Angabe eines Frequenzsprungs eine Angabe eines Frequenzsprungs eines Intra-Bandbreitenteils, BP, oder eine Angabe eines Frequenzsprungs zwischen BPs umfassen.

7. Ressourcenkonfigurationsverfahren, wobei das Verfahren umfasst:
Erfassen (801) von Konfigurationsinformationen einer physischen Uplink-Steuerkanal-, PUCCH, Ressource, die von einer Basisstation gesendet werden;
wobei die Konfigurationsinformationen ein Zeitintervall von den Downlink-Daten bis zur Rückmeldung von Informationen zur Angabe einer Bestätigungs-/ Nicht-Bestätigungs-Ressource einer PUCCH-Ressource umfassen,
**dadurch gekennzeichnet, dass** die Konfigurationsinformationen ferner eine Formatinformation, die für die Rückmeldung der PUCCH-Ressource verwendet wird, umfassen;
wobei die Formatinformation einen kurzen PUCCH aus 1 oder 2 Symbolen oder einen langen PUCCH aus 4 à 14 Symbolen umfasst; falls ein Uplink eines Speicherplatzes oder ein Uplink-Speicherplatz dynamisch variable PUCCH-Formate umfasst, dann umfasst die Formatinformation eine Anfangssymbolposition des PUCCH und eine Länge des PUCCH.

8. Ressourcenkonfigurationsverfahren nach Anspruch 7, wobei der Schritt des Erfassens der Konfigurationsinformationen der PUCCH-Ressource, die von der Basisstation gesendet werden, umfasst:
Empfangen von Downlink-Steuerinformationen, DCI, welche die Konfigurationsinformationen der PUCCH-Ressource transportieren; und
Erfassen der Konfigurationsinformationen der PUCCH-Ressource in den DCI.

9. Ressourcenkonfigurationsverfahren nach Anspruch 7, wobei das Zeitintervall eines von einer Vielzahl von voreingestellten Zeitintervallen ist; und die Vielzahl von voreingestellten Zeitintervallen auf gleiche oder ungleiche Intervalle eingestellt ist.

10. Ressourcenkonfigurationsverfahren nach Anspruch 7, wobei die Informationen zur Angabe einer Bestätigungs-/ Nicht-Bestätigungs-Ressource einen Ressourcensatz, der aus mindestens einer Ressource besteht, umfassen; oder die Informationen zur Angabe einer Bestätigungs-/ Nicht-Bestätigungs-Ressource eine Ressource und mindestens einen Versatz umfassen.

11. Ressourcenkonfigurationsverfahren nach Anspruch 7, wobei die Konfigurationsinformationen ferner mindestens eines von Wellenforminformationen, die verwendet werden, um die PUCCH-Ressource zu senden, oder von Informationen zur Identifizierung eines Frequenzsprungs umfassen.

12. Ressourcenkonfigurationsverfahren nach Anspruch 11, wobei die Formatinformation verwendet wird, um implizit Uplink-Steuerinformationen, UCI, zu verwenden, die von dem Endgerät gesendet werden.

13. Ressourcenkonfigurationsverfahren nach Anspruch 12, wobei die Informationen zur Identifizierung eines Frequenzsprungs umfassen: Informationen zur Angabe eines Frequenzsprungs und/oder eine Angabe einer Frequenzsprungteilung einer Ressource eines langen PUCCH umfassen;
wobei die Informationen zur Angabe eines Frequenzsprungs eine Angabe eines Frequenzsprungs eines Intra-Bandbreitenteils, BP, oder eine Angabe eines Frequenzsprungs zwischen BPs umfassen.

14. Basisstation, umfassend:
ein Sendemodul (901), das dazu konfiguriert ist, Konfigurationsinformationen einer physischen Uplink-Steuerkanal-, PUCCH, Ressource an ein Endgerät zu senden;
wobei die Konfigurationsinformationen ein Zeitintervall von den Downlink-Daten bis zur Rückmeldung von Informationen zur Angabe einer Bestätigungs-/ Nicht-Bestätigungs-Ressource einer PUCCH-Ressource umfassen,
**dadurch gekennzeichnet, dass** die Konfigurationsinformationen ferner eine Formatinformation umfassen, die für die Rückmeldung der PUCCH-Ressource verwendet wird;
wobei die Formatinformation einen kurzen PUCCH aus 1 oder 2 Symbolen oder einen langen PUCCH aus 4 bis 14 Symbolen umfasst; falls ein Uplink eines Speicherplatzes oder ein Uplink-Speicherplatz dynamisch variable PUCCH-Formate umfasst, dann umfasst die Formatinformation eine Anfangssymbolposition des PUCCH und eine Länge des PUCCH.

15. Endgerät, umfassend:
ein Erfassungsmodul (1101), das dazu konfiguriert ist, Konfigurationsinformationen einer Ressource eines physischen Uplink-Steuerkanals, PUCCH, die von der Basisstation gesendet werden, zu erfassen;
wobei die Konfigurationsinformationen ein Zeitintervall von den Downlink-Daten bis zur Rückmeldung von Informationen zur Angabe einer Bestätigungs-/ Nicht-Bestätigungs-Ressource einer PUCCH-Ressource umfassen,
**dadurch gekennzeichnet, dass** die Konfigurationsinformationen ferner eine Formatinformation umfassen, die für die Rückmeldung der PUCCH-Ressource verwendet wird;
wobei die Formatinformation einen kurzen PUCCH aus 1 oder 2 Symbolen oder einen langen PUCCH aus 4 bis 14 Symbolen umfasst; falls ein Uplink eines Speicherplatzes oder ein Uplink-Speicherplatz dynamisch variable PUCCH-Formate umfasst, dann umfasst die Formatinformation eine Anfangssymbolposition des PUCCH und eine Länge des PUCCH.

## Revendications

1. Procédé de configuration de ressource, le procédé comprenant les étapes consistant à :
émettre (101) des informations de configuration d'une ressource de canal de commande de liaison montante physique, PUCCH, à un terminal ;
dans lequel les informations de configuration comprennent un intervalle de temps des données de liaison descendante jusqu'au retour d'informations d'indication de ressource d'acquittement/ non acquittement d'une ressource PUCCH,
**caractérisé en ce que** les informations de configuration comprennent en outre une information de format utilisées pour le retour de la ressource PUCCH ;
dans lequel l'information de format comprend un PUCCH court de 1 ou 2 symboles, ou un PUCCH long de 4 à 14 symboles ; si une liaison montante d'un emplacement ou un emplacement de liaison montante comprend des formats PUCCH dynamiquement variables, alors l'information de format comprend une position de symbole de départ du PUCCH et une longueur du PUCCH.

2. Procédé de configuration de ressource selon la revendication 1, dans lequel l'étape consistant à émettre les informations de configuration de la ressource PUCCH au terminal, comprend :
l'émission d'informations de commande de liaison descendante, DCI, qui transportent les informations de configuration de la ressource PUCCH au terminal.

3. Procédé de configuration de ressource selon la revendication 1, dans lequel l'intervalle de temps est l'un d'une pluralité d'intervalles de temps préréglés ; et la pluralité d'intervalles de temps préréglés est réglée à des intervalles égaux ou à des intervalles inégaux.

4. Procédé de configuration de ressource selon la revendication 1, dans lequel les informations d'indication de ressource d'acquittement/ non acquittement comprennent un jeu de ressources composé d'une seule ressource ; ou les informations d'indication de ressource d'acquittement/ non acquittement comprennent une ressource et au moins un décalage.

5. Procédé de configuration de ressource selon la revendication 1, dans lequel les informations de configuration comprennent en outre au moins l'une parmi des informations de forme d'onde utilisées pour émettre la ressource PUCCH ou des informations d'identification de saut de fréquence.

6. Procédé de configuration de ressource selon la revendication 5, dans lequel l'information de format est utilisée pour indiquer implicitement des informations de commande de liaison montante, UCI, envoyées par le terminal ; ou
dans lequel les informations d'identification de saut de fréquence comprennent : des informations d'indication de saut de fréquence et/ou une indication de division de saut de fréquence de ressource de PUCCH long ;
dans lequel les informations d'indication de saut de fréquence comprennent une indication de saut de fréquence d'une partie de bande passante, BP, interne ou une indication de saut de fréquence entre BP.

7. Procédé de configuration de ressource, le procédé comprenant :
l'acquisition (801) d'informations de configuration d'une ressource de canal de commande de liaison montante physique, PUCCH, envoyées par une station de base ;
dans lequel les informations de configuration comprennent un intervalle de temps des données de liaison descendante jusqu'au retour d'informations d'indication de ressource d'acquittement/ non acquittement d'une ressource PUCCH,
**caractérisé en ce que** les informations de configuration comprennent en outre une information de format utilisée pour le retour de la ressource PUCCH ;
dans lequel l'information de format comprend un PUCCH court d'un 1 ou 2 symboles, ou un PUCCH long de 4 à 14 symboles ; si une liaison montante d'un emplacement ou un emplacement de liaison montante comprend des formats PUCCH dynamiquement variables, alors l'information de format comprend une position de symbole de départ du PUCCH et une longueur du PUCCH.

8. Procédé de configuration de ressource selon la revendication 7, dans lequel l'étape consistant à acquérir des informations de configuration de la ressource PUCCH envoyées par la station de base comprend :
la réception d'informations de commande de liaison descendante, DCl, transportant les informations de configuration de la ressource PUCCH ; et
l'acquisition des informations de configuration de la ressource PUCCH dans les DCI.

9. Procédé de configuration de ressource selon la revendication 7, dans lequel l'intervalle de temps est l'un d'une pluralité d'intervalles de temps préréglés ; et la pluralité d'intervalles de temps préréglés est réglée à des intervalles égaux ou à des intervalles inégaux.

10. Procédé de configuration de ressource selon la revendication 7, dans lequel les informations d'indication de ressource d'acquittement/ non acquittement comprennent au moins un jeu de ressources composé d'au moins une ressource ; ou les informations d'indication de ressource d'acquittement/ non acquittement comprennent une ressource et au moins un décalage.

11. Procédé de configuration de ressource selon la revendication 7, dans lequel les informations de configuration comprennent en outre au moins l'une parmi des informations de forme d'onde utilisées pour émettre la ressource PUCCH ou des informations d'identification de saut de fréquence.

12. Procédé de configuration de ressource selon la revendication 11, dans lequel l'information de format est utilisée pour indiquer implicitement des informations de commande de liaison montante, UCI, envoyées par le terminal.

13. Procédé de configuration de ressource selon la revendication 12, dans lequel les informations d'identification de saut de fréquence comprennent : des informations d'indication de saut de fréquence et/ou une indication de division de saut de fréquence de ressource de PUCCH long ;
dans lequel les informations d'indication de saut de fréquence comprennent une indication de saut de fréquence d'une partie de bande passante, BP, interne ou une indication de saut de fréquence entre BP.

14. Station de base, comprenant :
un module d'émission (901) configuré pour émettre des informations de configuration d'une ressource de canal de commande de liaison montante physique, PUCCH, à un terminal ;
dans lequel les informations de configuration comprennent un intervalle de temps des données de liaison descendante jusqu'au retour d'informations d'indication de ressource d'acquittement/ non acquittement d'une ressource PUCCH,
**caractérisée en ce que** les informations de configuration comprennent en outre une information de format utilisée pour le retour de la ressource PUCCH ;
dans lequel l'information de format comprend un PUCCH court de 1 ou 2 symboles, ou un PUCCH long de 4 à 14 symboles ; si une liaison montante d'un emplacement ou un emplacement de liaison montante comprend des formats PUCCH dynamiquement variables, alors l'information de format comprend une position de symbole de départ du PUCCH et une longueur du PUCCH.

15. Terminal, comprenant :
un module d'acquisition (1101) configuré pour acquérir des informations de configuration d'une ressource de canal de commande en liaison montante physique, PUCCH, envoyées par une station de base ;
dans lequel les informations de configuration comprennent un intervalle de temps des données de liaison descendante jusqu'au retour d'informations d'indication de ressource d'acquittement/ non acquittement d'une ressource PUCCH,
**caractérisé en ce que** les informations de configuration comprennent en outre une information de format utilisée pour le retour de la ressource PUCCH ;
dans lequel l'information de format comprend un PUCCH court de 1 ou 2 symboles, ou un PUCCH long de 4 à 14 symboles ; si une liaison montante d'un emplacement ou un emplacement de liaison montante comprend des formats PUCCH dynamiquement variables, alors l'information de format comprend une position de symbole de départ du PUCCH et une longueur du PUCCH.
